# FASCICULE DE BREVET EUROPEEN

(11) **EP 1 328 416 B1**
(45) Date de publication et mention de la délivrance du brevet: **23.08.2006**
(21) Numéro de dépôt: 01976425.7
(22) Date de dépôt: 12.10.2001
(51) Int. Cl.: B60J 7/14

(54) **TOIT RETRACTABLE POUR VEHICULE, COMPRENANT TROIS ELEMENTS LONGITUDINAUX**
VERSENKBARES FAHRZEUGDACH MIT DREI LÄNGSELEMENTEN
RETRACTABLE ROOF FOR VEHICLE, COMPRISING THREE LONGITUDINAL ELEMENTS

(30) Priorité: 23.10.2000 FR 0013549
(43) Date de publication de la demande: 23.07.2003
(73) Titulaire: Société Européenne de Brevets Automobiles - SEBA, 75011 Paris (FR)
(72) Inventeur: QUEVEAU, Gérard, F-79140 Le Pin (FR); GUILLEZ, Jean-Marc, F-79140 Cirières (FR)
(74) Mandataire: Geismar, Thierry
(86) Numéro de dépôt international: PCT/FR2001/003172
(87) Numéro de publication internationale: WO 2002/034560

(56) Documents cités:
- EP-A- 0 835 778
- EP-A- 0 993 979
- US-A- 2 704 225

## Description

La présente invention concerne un toit rétractable dans le coffre arrière d'un véhicule.

L'invention se rapporte plus précisément à un toit rétractable dans le coffre arrière d'un véhicule, comprenant un élément de toit avant et un élément de toit arrière, reliés entre eux par un élément intermédiaire, ces éléments étant mobiles entre une position fermée dans laquelle ces éléments s'étendent au-dessus de l'habitacle du véhicule et une position dans laquelle les éléments sont rangés dans le coffre arrière, des moyens de commande permettant de déplacer les éléments de toit entre les deux positions et dessus.

Un tel toit est connu du document EP-0 835 778.

Le toit rétractable ci-dessus permet de transformer un véhicule du type coupé à toit rigide en un véhicule de type cabriolet dont l'habitacle est complètement découvert.

Dans les véhicules présentant une longueur de toit importante, tels que les berlines ou coupés à quatre places, il se pose un problème pour stocker ces trois éléments à l'intérieur du coffre arrière, sans encombrer excessivement le volume de ce dernier.

Le but de la présente invention est de proposer une solution pour résoudre le problème ci-dessus.

Suivant l'invention, le toit rétractable est caractérisé en ce que lesdits moyens de commande comprennent :
- des premiers moyens pour commander et guider le déplacement de l'élément arrière vers une position rangée dans laquelle cet élément s'étend sensiblement horizontalement à la partie supérieure du coffre ;
- lesdits premiers moyens coopérant avec des deuxièmes moyens pour commander le soulèvement de l'élément intermédiaire par rapport à l'élément arrière, puis la superposition de cet élément intermédiaire au-dessus de l'élément arrière dans le coffre ;
- lesdits deuxièmes moyens coopérant avec des troisièmes moyens pour commander le pivotement vers le bas de l'élément avant pendant son déplacement vers le coffre, jusqu'à une position dans laquelle cet élément s'étend sensiblement verticalement à l'avant du coffre arrière.

Du fait de ces dispositions, il subsiste à l'intérieur du coffre, sous les éléments arrière et intermédiaire superposés, une hauteur suffisante au-dessus du plancher du coffre, tandis que la disposition de l'élément avant sensiblement verticale à l'avant du coffre permet d'obtenir une longueur de coffre suffisante. Selon une version préférée de l'invention, lesdits premiers moyens comprennent un bras pivotant articulé au châssis du véhicule et à la partie avant de l'élément arrière, le pivotement de ce bras étant commandé par un organe moteur et une glissière fixe s'étendant dans le coffre dans laquelle est engagé un doigt solidaire de la partie arrière de l'élément arrière.

Selon une version avantageuse de l'invention, lesdits deuxièmes moyens comprennent deux leviers articulés d'une part à la partie avant de l'élément arrière suivant des axes situés en avant de l'axe d'articulation dudit bras à l'élément arrière et d'autre part à l'élément intermédiaire, les articulations desdits leviers formant un quadrilatère déformable, l'un desdits leviers étant relié au bras par une biellette articulée à ce levier et à ce bras.

Selon un mode de réalisation préféré de l'invention, lesdits troisièmes moyens comprennent une biellette reliant de façon articulée l'un desdits leviers à une extension de l'arrière de l'élément avant qui est articulée à l'avant de l'élément intermédiaire.

D'autres particularités et avantages de l'invention apparaîtront encore dans le descriptif ci-après.

Aux dessins annexés, donnés à titre d'exemples non limitatifs :
- la figure 1 est une vue schématique en coupe longitudinale, d'un toit rétractable selon l'invention en position fermée ;
- la figure 2 est une vue schématique en coupe longitudinale partielle de l'élément avant et de l'élément intermédiaire du toit, illustrant un détail concernant un mode de réalisation préféré ;
- la figure 3 est une vue analogue montrant une position intermédiaire des éléments du toit ;
- la figure 4 est une vue analogue aux figures 1 et 3, montrant les éléments du toit rangés à l'intérieur du coffre arrière du véhicule.

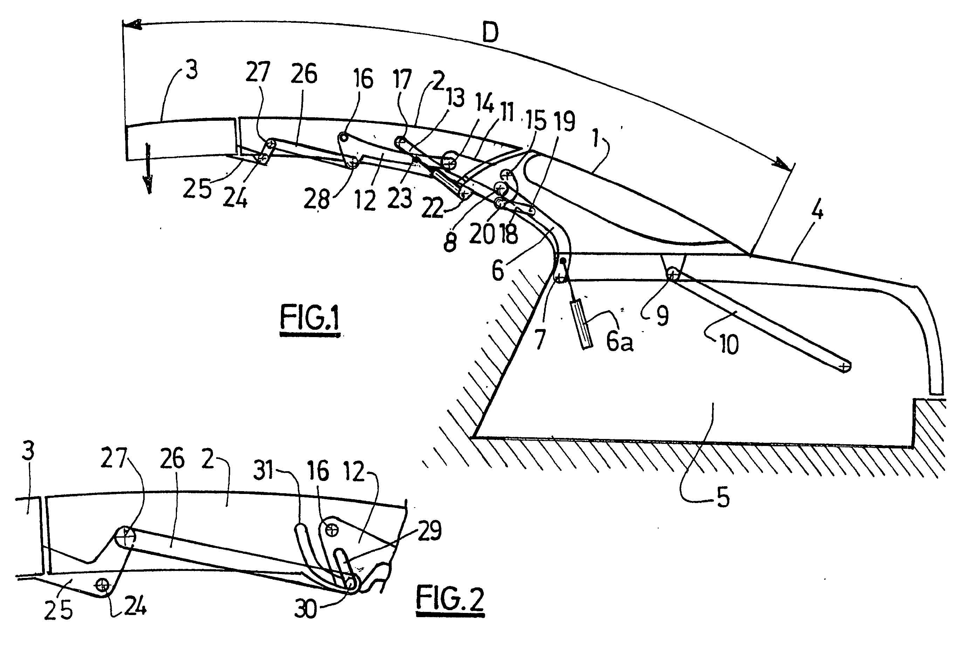

Dans la réalisation représentée sur les figures 1 à 4, le toit rétractable dans le coffre arrière 5 d'un véhicule, comprend un élément rigide de toit avant 3 et un élément rigide de toit arrière 1, reliés entre eux par un élément rigide intermédiaire 2.

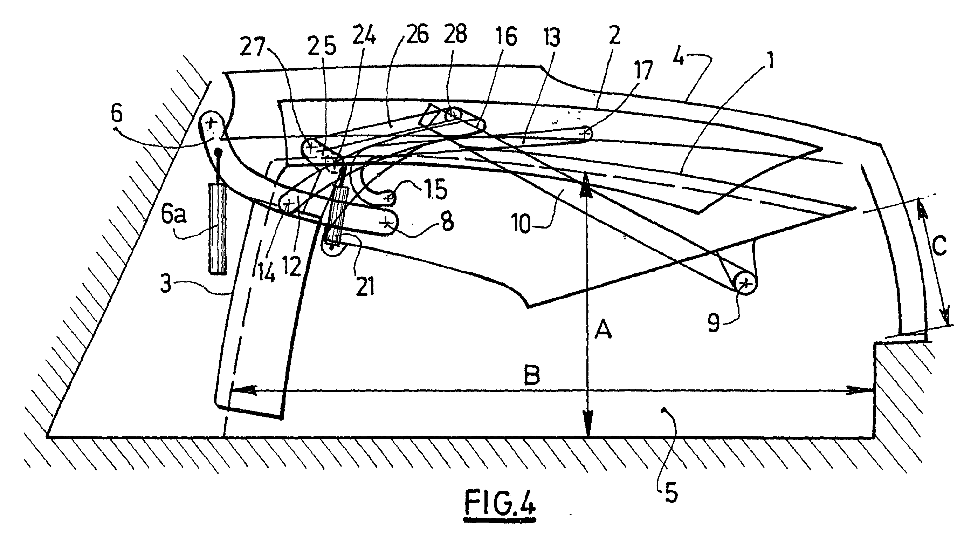

Ces éléments sont mobiles entre une position fermée (figure 1) dans laquelle ces éléments 3, 2, 1, s'étendent au-dessus de l'habitacle du véhicule et une position (figure 4) dans laquelle les éléments 3, 2, 1 sont rangés dans le coffre arrière 5.

Des moyens de commande permettent de déplacer les éléments du toit 3, 2, 1 entre les deux positions ci-dessus.

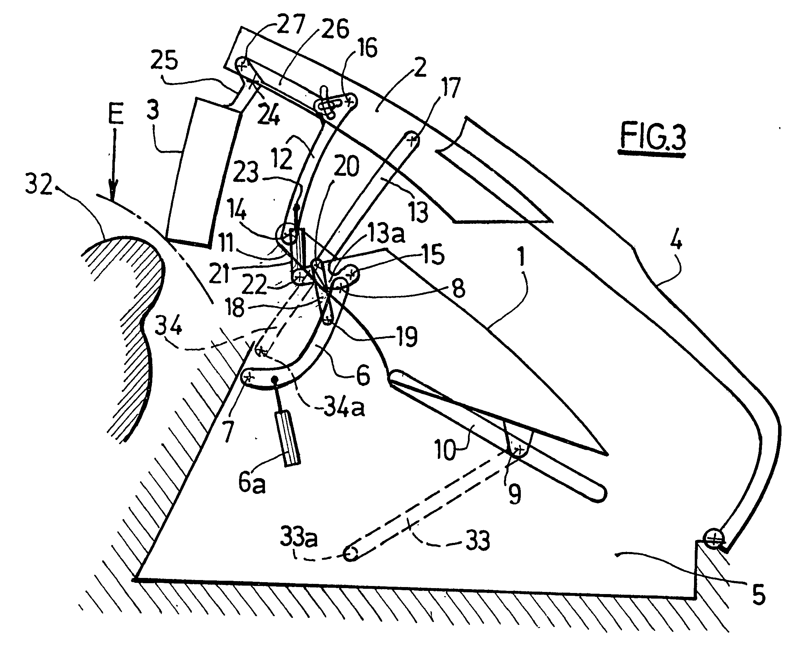

Conformément à l'invention, les moyens de commande comprennent :
- des premiers moyens pour commander et guider le déplacement de l'élément arrière 1 vers une position rangée dans laquelle cet élément 1 s'étend sensiblement horizontalement à la partie supérieure du coffre 5 (voir figure 4) ;
- lesdits premiers moyens coopérant avec des deuxièmes moyens pour commander le soulèvement (voir figure 3) de l'élément intermédiaire 2 puis la superposition (voir figure 4) de cet élément intermédiaire 2 au-dessus de l'élément arrière 1 dans le coffre 5 ;
- lesdits deuxièmes moyens coopérant avec des troisièmes moyens pour commander le pivotement vers le bas (voir figure 3) de l'élément avant 3 pendant son déplacement vers le coffre 5, jusqu'à une position (voir figure 4) dans laquelle cet élément s'étend sensiblement verticalement à l'avant du coffre arrière 5.

Comme indiqué sur les figures 1, 3, et 4 les premiers moyens comprennent un bras pivotant 6 articulé en 7 au châssis du véhicule, près du bord supérieur avant du coffre 5, et en 8 à la partie avant de l'élément arrière 1.

Le pivotement de ce bras 6 est commandé par un organe moteur 6a, tel qu'un vérin. Par ailleurs une glissière fixe 10, s'étend dans le coffre 5. Dans cette dernière est engagé un doigt 9 solidaire de la partie arrière de l'élément arrière 1.

Selon une variante (voir figure 3) la glissière 8 est remplacée par un second bras 33 articulé en 33a au châssis et à la partie avant de l'élément arrière 1, le second bras 33 formant un quadrilatère déformable avec le bras 6.

Comme on le voit également sur les figures 1, 3, et 4, les deuxièmes moyens comprennent deux leviers 12, 13 articulés d'une part à la partie avant 11 de l'élément arrière 1 suivant des axes 14, 15 situés en avant de l'axe d'articulation 8 du bras 6 à l'élément arrière 1 et d'autre part à l'élément intermédiaire 2 suivant des axes 16, 17.

Les articulations 14, 15, 16, 17 des leviers 12, 13 forment un quadrilatère déformable.

Par ailleurs, l'un 13 des leviers est relié au bras 6 par une biellette 18 articulée en 20 à ce levier 13 et en 19 à ce bras 6.

Comme montré notamment à la figure 3, le levier 13 comporte à son extrémité adjacente au bras 6 un coude 13a. La biellette 18 est articulée en 20 près du sommet de ce coude 13a.

Selon une variante, la biellette 18 est remplacée par une biellette 34 reliée à ce levier 13 et à un axe d'articulation 34a fixe par rapport au châssis (voir figure 3).

Les figures 1, 3, et 4 montrent d'autre part que les troisièmes moyens comprennent une biellette 26 reliant de façon articulée en 27, l'un 12 des leviers à une extension 25 de l'arrière de l'élément avant 3.

Cette extension 25 est articulée en 24 à l'avant de l'élément intermédiaire 2. Par ailleurs la biellette 26 est articulée audit levier 12 suivant un axe 28 décalé de l'axe d'articulation 16 du levier 12 à l'élément intermédiaire 2. De plus cette biellette 26 est articulée à l'extension 25 de l'élément avant 3 suivant un axe 27 situé au-delà de son axe 24 d'articulation à l'élément intermédiaire 2.

Dans la variante illustrée par la figure 2, l'un 12, des leviers est relié de façon articulée à la biellette 26 par un doigt 30 engagé de façon coulissante dans une ouverture oblongue 29 ménagée à l'extrémité du levier 12 adjacente à l'élément intermédiaire 2. De plus le doigt 30 est en outre engagé dans une rainure courbe 31 solidaire de l'élément intermédiaire 2.

Comme montré, notamment par la figure 3, l'un 12 des leviers est relié de façon articulée en 23 à un organe d'équilibrage 21 qui est articulé en 22 à l'élément arrière 1, pour équilibrer l'ensemble lors de son déplacement vers le coffre 5. D'autre part, comme montré par la figure 3, la longueur du bras 6 et des leviers 12, 13 est suffisante pour que lors du déplacement des éléments du toit 1, 2, 3, vers le coffre 5, l'élément avant 3 étant replié vers le bas, ce dernier puisse passer au-dessus de la tête 32 d'un passager situé à l'arrière de l'habitacle du véhicule.

On va maintenant décrire le fonctionnement du toit escamotable selon l'invention.

Pour passer de la position fermée à la position ouverte, le mouvement du toit s'exécute de la façon suivante.

Tout d'abord, le mouvement 1 entraîne l'élément intermédiaire 2 lui-même entraînant l'élément avant 3. L'élément arrière 1 est entraîné dans sa partie avant par le bras 6 articulé en 7 sur le châssis et en 8 à l'élément arrière 1.
La partie arrière de l'élément arrière 1 est entraînée par l'axe 9 solidaire de cet élément 1 coulissant dans la glissière 10 solidaire du châssis.

L'élément intermédiaire 2 est entraîné par les deux leviers 12 et 13, formant quadrilatère articulé d'une part sur l'extension 11 de l'élément 1 respectivement en 14 et 15 et d'autre part sur l'élément 2 en 16 et 17.

Le bras 6 actionne le mouvement de l'élément intermédiaire 2 en poussant sur le levier 13 par l'intermédiaire de la biellette 18 articulée en 19 sur le bras 6 et en 20 sur le levier 13 lors de la rotation dudit bras 6.

Ce mouvement est équilibré par un stabilus 21 articulé respectivement en 22 sur l'élément 1 et en 23 sur le levier 12.

Le levier 12 actionne le mouvement de l'élément de toit 3 par l'intermédiaire d'une biellette 26 poussant sur l'extension 25 de l'élément 3.

La variante illustrée par la figure 2 permet à l'élément 3 d'avoir un mouvement de rotation non linéaire pour lui permettre un déplacement plus sophistiqué, tel que le passage E au-dessus de la tête 32, illustré par la figure 3.

Dans ce cas, la biellette 26 possède un doigt 30 coulissant dans une ouverture oblongue 29 ménagée à l'extrémité avant du levier 12.

Lors de la rotation du levier 12 autour de l'axe 16, ce levier 12 pousse la biellette 26 par l'intermédiaire du doigt 30, elle-même poussant l'extension 25 de l'élément 3 articulé en 24 actionnant l'élément 3 en rotation.
Pour commander le mouvement de la biellette 26 par l'intermédiaire du doigt 30 d'une manière non linéaire, ledit doigt 30 coulisse dans la rainure 31 solidaire de l'élément 2 jouant le rôle de came et dont la forme dépend du mouvement angulaire désiré pour l'élément 3.

Comme montré par la figure 4, la position de stockage des éléments 1, 2, 3, permet d'optimiser la hauteur A et la longueur B du coffre 5 ainsi que la hauteur d'entrée C de ce dernier et ce, malgré la longueur totale D du pavillon importante (voir figure 1). Les dimensions A, B, C, sont accentuées du fait que la concavité des éléments 1, 2, 3 est dirigée vers, l'intérieur du coffre.

Ainsi, l'invention est particulièrement bien adaptée aux berlines et coupés de quatre places.

Bien entendu, l'invention n'est pas limitée aux exemples de réalisations que l'on vient de décrire et on peut apporter à ceux-ci de nombreuses modifications sans sortir du cadre de l'invention.

Ainsi une commande centralisée peut être prévue, pour commander simultanément :
- l'ouverture du couvercle 4 du coffre de l'avant vers l'arrière comme indiqué sur la figure 4 pour permettre le passage des éléments du toit ;
- le déverrouillage des éléments du toit par rapport à la carrosserie ;
- l'actionnement du vérin ou du moteur pour faire pivoter le bras 6.

Le couvercle 4 peut également s'ouvrir de l'arrière vers l'avant pour faciliter l'introduction et le retrait des bagages.

## Revendications

1. Toit rétractable dans le coffre arrière (5) d'un véhicule, comprenant un élément de toit avant (3) et un élément de toit arrière (1), reliés entre eux par un élément intermédiaire, ces éléments étant mobiles entre une position fermée dans laquelle ces éléments (3, 2, 1) s'étendent au-dessus de l'habitacle du véhicule et une position dans laquelle les éléments (3, 2, 1) sont rangés dans le coffre arrière (5), des moyens de commande permettant de déplacer les éléments de toit (3, 2, 1) entre les deux positions ci-dessus, **caractérisé en ce que** lesdits moyens de commande comprennent :
- des premiers moyens pour commander et guider le déplacement de l'élément arrière (1) vers une position rangée dans laquelle cet élément (1) s'étend sensiblement horizontalement à la partie supérieure du coffre (5) ;
- lesdits premiers moyens coopérant avec des deuxièmes moyens pour commander le soulèvement de l'élément intermédiaire (2) par rapport à l'élément arrière (1), puis la superposition de cet élément intermédiaire (2) au-dessus de l'élément arrière dans le coffre (5) ;
- lesdits deuxièmes moyens coopérant avec des troisièmes moyens pour commander le pivotement vers le bas de l'élément avant (3) pendant son déplacement vers le coffre (5), jusqu'à une position dans laquelle cet élément s'étend sensiblement verticalement à l'avant du coffre arrière (5).

2. Toit rétractable conforme à la revendication 1, **caractérisé en ce que** lesdits premiers moyens comprennent un bras pivotant (6) articulé au châssis du véhicule et à la partie avant de l'élément arrière (1), le pivotement de ce bras (6) étant commandé par un organe moteur (6a) et une glissière fixe (10) s'étendant dans le coffre (5) dans laquelle est engagé un doigt (9) solidaire de la partie arrière de l'élément arrière (1).

3. Toit rétractable conforme à la revendication 1, **caractérisé en ce que** lesdits premiers moyens comprennent un bras pivotant (6) articulé au châssis du véhicule et à la partie avant l'élément arrière (1), le pivotement de ce bras (6) étant commandé par un organe moteur (6a), et un second bras (33) articulé au châssis et à la partie avant de l'élément arrière (1), ce second bras (33) formant un quadrilatère déformable avec le bras (6).

4. Toit rétractable conforme à l'une des revendications 1 ou 2, **caractérisé en ce que** lesdits deuxièmes moyens comprennent deux leviers (12, 13) articulés d'une part à la partie avant (11) de l'élément arrière (1) suivant des axes (14, 15) situés en avant de l'axe d'articulation (8) dudit bras (6) à l'élément arrière (1) et d'autre part à l'élément intermédiaire (2), les articulations (14, 15, 16, 17) desdits leviers (12, 13) formant un quadrilatère déformable, l'un (13) desdits leviers étant relié au bras (6) par une biellette (18) articulée à ce levier (13) et à ce bras (6).

5. Toit rétractable conforme à l'une des revendications 1 à 3, **caractérisé en ce que** lesdits deuxièmes moyens comprennent deux leviers (12, 13) articulés d'une part à la partie avant (11) de l'élément arrière (1) suivant des axes (14, 15) situés en avant de l'axe d'articulation (8) dudit bras (6) à l'élément arrière (1) et d'autre part à l'élément intermédiaire (2), les articulations (14, 15, 16, 17) desdits leviers (12, 13) formant un quadrilatère déformable, l'un (13) desdits leviers étant relié au bras (6) par une biellette (34) reliée à ce levier (13) et à un axe d'articulation (34a) fixe par rapport au châssis.

6. Toit rétractable conforme à la revendication 4, **caractérisé en ce que** ledit levier (13) comporte à son extrémité adjacente au bras (6) un coude (13a), ladite biellette (18) étant articulée près du sommet dudit coude (13a).

7. Toit rétractable conforme à l'une des revendications 4 ou 5 ; **caractérisé en ce que** lesdits troisièmes moyens comprennent une biellette (26) reliant de façon articulée l'un (12) desdits leviers à une extension (25) de l'arrière de l'élément avant (3), qui est articulée à l'avant de l'élément intermédiaire (2).

8. Toit rétractable conforme à la revendication 7, **caractérisé en ce que** ladite biellette (26) est articulée audit levier (12) suivant un axe (28) décalé de l'axe d'articulation(16) dudit levier (12) à l'élément intermédiaire (2), cette biellette (26) étant articulée à ladite extension (25) de l'élément avant (3) suivant un axe (27) situé au-delà de son axe (24) d'articulation à l'élément intermédiaire (2).

9. Toit rétractable conforme à l'une des revendications 4 à 8, **caractérisé en ce que** l'un (12) desdits leviers est relié de façon articulée à un organe d'équilibrage (21) pour équilibrer l'ensemble lors de son déplacement vers le coffre (5).

10. Toit rétractable conforme à l'une des revendications 4 à 9, **caractérisé en ce que** l'un (12) des leviers est relié de façon articulée à la biellette (26) par un doigt (30) engagé de façon coulissante dans une ouverture oblongue (29) ménagée à l'extrémité du levier (12) adjacente à l'élément intermédiaire (2), le doigt (30) étant en outre engagé dans une rainure courbe (31) solidaire de l'élément intermédiaire (2).

11. Toit rétractable conforme à l'une des revendications 4 à 10, **caractérisé en ce que** la longueur dudit bras (6) et desdits leviers (12, 13) est suffisante pour que lors du déplacement des éléments du toit (1, 2, 3) vers le coffre (5), l'élément avant (3) étant replié vers le bas, ce dernier puisse passer au-dessus de la tête (32) d'un passager situé à l'arrière de l'habitacle du véhicule.

## Claims

1. Retractable roof that can be stored in the rear boot (5) of a vehicle, comprising a front roof element (3) and a rear roof element (1), connected to each other by an intermediate element, these elements being mobile between a closed position in which these elements (3, 2, 1) extend above the passenger compartment of the vehicle and a position in which the elements (3, 2, 1) are stored in the rear boot (5), control means that makes it possible to move the roof elements (3, 2, 1) between the two aforementioned positions, **characterised in that** said control means comprises:
- first means for controlling and guiding the movement of the rear element (1) towards a stored position in which this element (1) extends substantially horizontal to the top part of the boot (5);
- said first means cooperating with second means to control the lifting of the intermediate element (2) in relation to the rear element (1), followed by the placing of this intermediate element (2) on top of the rear element in the boot (5) ;
- said second means cooperating with a third system to control the pivoting of the front element (3) downwards during its movement towards the boot (5) into a position in which this element extends substantially vertical to the front of the rear boot (5).

2. Retractable roof according to claim 1, **characterised in that** said first means comprise a pivoting arm (6) connected to the chassis of the vehicle and to the rear element (1), the pivoting of this arm (6) being controlled by a motor element (6a) and a fixed guide rail (10) extending into the boot (5) in which is inserted a finger (9) solidly attached to the rear part of the rear element (1).

3. Retractable roof according to claim 1, **characterised in that** said first means comprise a pivoting arm (6) connected to the chassis of the vehicle and to the front part of the rear element (1), the pivoting of this arm (6) being controlled by a motor element (6a), and a second arm (33) connected to the chassis and to the front part of the rear element (1), this second arm (33) forming a deformable quadrilateral with the arm (6).

4. Retractable roof according to either one of the claims 1 or 2, **characterised in that** said second means comprise two levers (12, 13) connected by one side to the front part (11) of the rear element (1) by axles (14, 15) situated to the front of the axle (8) that connects said arm (6) to the rear element (1) and by the other side to the intermediate element (2), the mobile joints (14, 15, 16, 17) of said levers (12, 13) forming a deformable quadrilateral, one (13) of said levers being connected to the arm (6) by means of a connecting rod (18) connected to this lever (13) and to this arm (6).

5. Retractable roof according to any one of the claims from 1 to 3, **characterised in that** said second means comprise two levers (12, 13) connected by one side to the front part (11) of the rear element (1) by axles (14, 15) situated to the front of the axle (8) that connects said arm (6) to the rear element (1) and by the other side to the intermediate element (2), the mobile joints (14, 15, 16, 17) of said levers (12, 13) forming a deformable quadrilateral, one (13) of said levers being connected to the arm (6) by means of a connecting rod (34) connected to this lever (13) and to a connection axle (34a) that is fixed in relation to the chassis.

6. Retractable roof according to claim 4, **characterised in that** said lever (13) comprises a bend (13a) on its end that is adjacent to the arm (6), said connecting rod (18) being connected near the peak of said bend (13a).

7. Retractable roof according to either one of the claims 4 or 5, **characterised in that** said third means comprise a connecting rod (26) linking in an articulated fashion one (12) of said levers to an extension (25) of the rear of the front element (3), which is connected to the front of the intermediate element (2).

8. Retractable roof according to claim 7, **characterised in that** said connecting rod (26) is connected to said lever (12) by an axle (28) that is separated from the axle (16) that connects said lever (12) to the intermediate element (2), this connecting rod (26) being connected to said extension (25) of the front element (3) by an axle (27) situated beyond the axle (24) that connects it to the intermediate element (2).

9. Retractable roof according to any one of the claims from 4 to 8, **characterised in that** one (12) of said levers is connected in an articulated fashion to a balancing element (21) so as to balance the assembly during its movement into the boot (5).

10. Retractable roof according to any one of the claims from 4 to 9, **characterised in that** one (12) of the levers is connected in an articulated fashion to the connecting rod (26) by a finger (30) inserted so as to slide in an oblong opening (29) made in the end of the lever (12) that is adjacent to the intermediate element (2), the finger (30) also being inserted in a curved groove (31) that is an integral part of the intermediate element (2).

11. Retractable roof according to any one of the claims from 4 to 10, **characterised in that** the length of said arm (6) and said levers (12, 13) is sufficient so that, during the movement of the roof elements (1, 2, 3) into the boot (5), the front element (3) being folded downwards, the latter can pass over the head (32) of a passenger sitting in the back seat of the passenger compartment of the vehicle.

## Patentansprüche

1. Schiebedach in einem Kofferraum (5) eines Fahrzeugs, das ein vorderes Dachelement (3) und ein hinteres Dachelement (1) umfasst, die durch ein Zwischenelement miteinander verbunden sind, wobei diese Elemente zwischen einer geschlossenen Position, in der sich diese Elemente (3, 2, 1) über dem Fahrzeuginnenraum erstrecken, und einer Position, in der die Elemente (3, 2, 1) im Kofferraum (5) verstaut sind, bewegt werden können, Steuermittel zum Verschieben der Dachelemente (3, 2, 1) zwischen den beiden oben genannten Positionen, **dadurch gekennzeichnet, dass** besagte Steuermittel folgendes umfassen:
- erste Steuermittel zum Steuern und Führen der Bewegung des hinteren Elements (1) auf eine Stauposition, in der sich dieses Element (1) deutlich horizontal am oberen Teil des Kofferraums (5) erstreckt;
- wobei besagte erste Mittel mit den zweiten Mitteln zusammenwirken, um das Anheben des Zwischenelements (2) in Bezug auf das hintere Element (1) und die Auflage dieses Zwischenelements (2) auf das hintere Element im Kofferraum (5) zu bewirken;
- wobei besagte zweite Mittel mit dritten Mitteln zusammenwirken, um das Schwenken des vorderen Elements (3) während seiner Bewegung zum Kofferraum (5) hin nach unten zu bewirken, bis eine Position erreicht wird, in der sich dieses Element deutlich senkrecht im vorderen Teil des Kofferraums (5) erstreckt.

2. Schiebedach gemäß Patentanspruch 1, **dadurch gekennzeichnet, dass** besagte erste Mittel einen schwenkbaren Arm (6) umfassen, der am Rahmen des Fahrzeugs und am vorderen Teil des hinteren Elements (1) beweglich befestigt ist, wobei das Schwenken dieses Arms (6) durch ein Antriebsaggregat (6a) und eine feststehende Schiene (10) gesteuert wird, die sich im Kofferraum (5) erstrecken, und in der Schiene ein Stift (9), der mit dem hinteren Teil des hinteren Elements (1) verbunden ist, eingeführt ist.

3. Schiebedach nach Patentanspruch 1, **dadurch gekennzeichnet, dass** besagte erste Mittel einen schwenkbaren Arm (6) umfassen, der am Rahmen des Fahrzeugs und am vorderen Teil des hinteren Elements (1) beweglich befestigt ist, wobei das Schwenken dieses Arms (6) durch ein Antriebsaggregat (6a) gesteuert wird, und einen zweiten Arm (33), der am Rahmen und am vorderen Teil des hinteren Elements (1) beweglich befestigt ist, wobei dieser zweite Arm (33) mit dem Arm (6) ein verformbares Viereck bildet.

4. Schiebedach gemäß einem der Patentansprüche 1 oder 2, **dadurch gekennzeichnet, dass** besagte zweite Mittel zwei Hebel (12, 13) umfassen, die zum einen mit dem vorderen Teil (11) des hinteren Elements (1) auf den Achsen (14, 15) vor der Gelenkachse (8) besagten Arms (6) am hinteren Element (1), und zum anderen am Zwischenelement (2) beweglich befestigt sind, wobei die Gelenke (14, 15, 16, 17) besagter Hebel (12, 13) ein verformbares Viereck bilden, und einer (13) der besagten Hebel mit dem Arm (6) über ein Pleuel (18) verbunden ist, das mit diesem Hebel (13) und diesem Arm (6) beweglich verbunden ist.

5. Schiebedach gemäß einem der Patentansprüche 1 bis 3, **dadurch gekennzeichnet, dass** besagte zweite Mittel zwei Hebel (12, 13) umfassen, die zum einen am vorderen Teil (11) des hinteren Elements (1) auf den Achsen (14, 15) vor der Gelenkachse (8) besagten Arms (6) mit dem hinteren Element (1), und zum anderen mit dem Zwischenelement (2) beweglich verbunden sind, wobei die Gelenke (14, 15, 16, 17) besagter Hebel (12, 13) ein verformbares Viereck bilden, und einer (13) der besagten Hebel mit Arm (6) durch ein Pleuel (34) verbunden ist, das mit diesem Hebel (13) und einer in Bezug auf das Gestell feststehenden Gelenkachse(34a)verbunden ist.

6. Schiebedach gemäß Patentanspruch 4, **dadurch gekennzeichnet, dass** besagter Hebel (13) an seinem, an den Arm (6) angrenzenden Ende ein Knie (13a) umfasst, wobei besagtes Pleuel (18) nahe der Spitze des Knies (13a) bewegt wird.

7. Schiebedach gemäß einem der Patentansprüche 4 oder 5, **dadurch gekennzeichnet, dass** besagte dritte Mittel ein Pleuel (26) umfassen, dass einen (12) der besagten Hebel mit einer Erweiterung (25) des hinteren Teils des vorderen Elements (3), das am vorderen Teil des Zwischenelement (2) gelenkig ist, verbindet.

8. Schiebedach gemäß Patentanspruch 7, **dadurch gekennzeichnet, dass** besagtes Pleuel (26) mit besagtem Hebel (12) auf einer Achse (28) verschoben zur Gelenkachse (16) von Hebel (12) mit dem Zwischenelement (2) beweglich verbunden ist, wobei dieses Pleuel (26) mit besagter Erweiterung (25) des vorderen Elements (3) auf einer Achse (27) auf der anderen Seite seiner Gelenkachse (24) mit dem Zwischenelement (2) beweglich verbunden ist.

9. Schiebedach gemäß einem der Patentansprüche 4 bis 8, **dadurch gekennzeichnet, dass** einer (12) der besagten Hebel beweglich mit einem Ausgleichsorgan (21) verbunden ist, um die Einheit beim Verschieben in den Kofferraum (5) auszugleichen.

10. Schiebedach gemäß einem der Patentansprüche 4 bis 9, **dadurch gekennzeichnet, dass** einer (12) der Hebel beweglich durch einen Stift (30), der verschiebbar in einer länglichen Öffnungen (29) am Ende des Hebels (12) angrenzend an das Zwischenelement (2) eingeführt ist, mit dem Pleuel (26) beweglich verbunden ist, wobei der Stift des Weiteren in eine gebogene Nut (31) eingeführt ist, die mit dem Zwischenelement (2) fest verbunden ist.

11. Schiebedach gemäß einem der Patentansprüche 4 bis 10, **dadurch gekennzeichnet, dass** die Länge des besagten Arms (6) und der Hebel (12, 13) ausreicht, um beim Verschieben der Dachelemente (1, 2, 3) in den Kofferraum (5) bei nach unten geklapptem vorderen Element letzteres oberhalb des Kopfes (32) eines Fahrgastes im hinteren Bereich des Fahrgastraums verlaufen könnte.
